# EUROPEAN PATENT SPECIFICATION

(11) **EP 2 831 213 B1**
(45) Date of publication and mention of the grant of the patent: **18.05.2016**
(21) Application number: 13707856.4
(22) Date of filing: 05.03.2013
(51) Int. Cl.: C11D 9/26, A61K 8/30, A61K 8/34, A01N 31/08, A01N 31/06, A01N 31/04, C11D 3/20, C11D 3/37, C11D 3/48, C11D 17/00

(54) **SOAP BAR COMPOSITION**
SEIFENRIEGELZUSAMMENSETZUNG
COMPOSITION DE PAIN DE SAVON

(30) Priority: 27.03.2012 IN MM08632012; 22.05.2012 EP 12168864
(43) Date of publication of application: 04.02.2015
(73) Proprietor: Unilever N.V., 3013 AL Rotterdam (NL); Unilever PLC, London EC4Y 0DY (GB)
(72) Inventor: AGARKHED, Ajit, Manohar, Chakala Andheri East Mumbai 400 099 (IN); CHAKRABORTTY, Amit, Whitefield Bangalore 560 066 (IN); CHEVITI, Bharat, Whitefield Bangalore 560 066 (IN); GUPTA, Shashank, Narendra, Chakala Andheri East Mumbai 400 099 (IN); IYER, Vidula, Whitefield P.O. Bangalore 560 066 (IN); KUMAR, Nitish, Chakala Andheri East Mumbai 400 099 (IN); MEDEPALLI, Srilaxmi, Venkata, Whitefield Bangalore 560 066 (IN); SANZGIRI, Vibhav, Ramrao, Chakala Andheri East Mumbai 400 099 (IN)
(74) Representative: Wurfbain, Gilles L.
(86) International application number: PCT/EP2013/054333
(87) International publication number: WO 2013/143808

(56) References cited:
- WO-A1-03/010273
- WO-A1-2010/046238
- US-A- 4 267 168
- A.DAVIES, B.S.FIELD: "Action of Biguanides, Phenols and Detergents on Escherichia coli and its Spheroplasts", J.APPL.BACT., vol. 32, 1969, pages 233-243, XP002681731,

## Description

### TECHNICAL FIELD:

The present invention relates to a substantially transparent soap bar composition. The invention more particularly relates to a transparent soap composition which provides excellent in-use properties, visual appeal and germ reduction on skin surface when used by the consumer.

### BACKGROUND OF THE INVENTION:

Transparent soaps have aesthetic appeal and are perceived to be milder than opaque soaps. The soaps are often delivered in the bar form and several methods to prepare transparent soap bars have been known and used.

Transparent soap bars are usually prepared by mixing alkali metal salts of fatty acids with water along with other conventional ingredients. These soap bars are usually prepared by using the so called melt-cast route where the soap composition is prepared in a molten state and poured into a mould of desired size. On cooling the mould the soap composition hardens which is then demoulded and optionally cut into bars of desired size. Conventionally volatile alcohols in high quantities were used for preparing transparent bars which required a process where the bars had to be matured for several weeks before the transparent appearance was achieved. The present applicants have disclosed in US6730643 a transparent soap bar composition prepared using select fatty acid mixture and select polyhydric alcohols. The present applicant has also disclosed in WO20100046238 that a composition comprising terpineol and thymol provides for enhanced germ reduction in fast acting time frames, in many cases in as low as 15 seconds after application of the composition on the desired surface. By way of the present invention, it has now been found that incorporation of thymol and terpineol in a transparent soap bar composition not only provides for enhanced visual and other sensory advantages but further enhanced germ reduction benefits in such fast acting time frames.

It is thus an object of the present invention to provide for a soap bar composition that has the dual benefits of excellent visual and other sensory attributes while providing enhanced germ reduction benefits.

### SUMMARY OF THE INVENTION

The present invention provides for a substantially transparent soap bar composition comprising
(i) 30 to 60% of total fatty matter;
(ii) 20 to 50% of a polyhydric alcohol;
(iii)0.01 to 5% terpineol;
(iv)0.01 to 5% thymol; and
(v) 5 to 25% water by weight of the composition.

A preferred aspect of the present invention provides for the composition to be prepared by a process comprising the steps of:
(i) preparing a melt of the composition at a temperature in the range of 40 to 90 °C;
(ii) pouring the melt into a suitable mould,
(iii)cooling the composition to a temperature in the range of 20 to 30 °C; and
(iv)demoulding the composition.

Another preferred aspect relates to a method of providing germ reduction to a surface comprising the steps of
(i) applying the composition of the invention on to a surface and
(ii) rinsing the surface with a suitable solvent or wiping the surface with a suitable wipe

### DETAILED DESCRIPTION OF THE INVENTION:

These and other aspects, features and advantages will become apparent to those of ordinary skill in the art from a reading of the following detailed description and the appended claims. For the avoidance of doubt, any feature of one aspect of the present invention may be utilised in any other aspect of the invention. The word "comprising" is intended to mean "including" but not necessarily "consisting of" or "composed of." In other words, the listed steps or options need not be exhaustive. It is noted that the examples given in the description below are intended to clarify the invention and are not intended to limit the invention to those examples per se. Similarly, all percentages are weight/weight percentages unless otherwise indicated.

Except in the operating and comparative examples, or where otherwise explicitly indicated, all numbers in this description indicating amounts of material or conditions of reaction, physical properties of materials and/or use are to be understood as modified by the word "about". Unless specified otherwise, numerical ranges expressed in the format "from x to y" are understood to include x and y. When for a specific feature multiple preferred ranges are described in the format "from x to y", it is understood that all ranges combining the different endpoints are also contemplated.

By the word transparent is meant that a soap bar is capable of transmitting light there through. More specifically, by substantially transparent is meant that a 1 cm thick sample of the material transmits at least 5% of visible light, preferably at least 20% of visible light, more preferably at least 50% of visible light. More preferably the soap bar is transparent. A soap bar is transparent if a 1 cm thick sample of the material transmits at least 70% of visible light, preferably at least 90%. Due to the almost inevitable absorption and/or scattering of some of the light, the transmission is generally below 95% of visible light. Visible light is generally understood to refer to light with a wavelength between about 390 nm and about 750 nm. Moreover, the percentage of light that is transmitted need not be the same at every wavelength, for example when a dye or another coloured ingredient is present.

The composition of the present invention are preferred for non-therapeutic use, and more particularly preferred for use in cleaning surfaces of human body including skin and hair or may be used for hard surface cleaning applications.

The present invention has the advantage that it comprises low amounts of total fatty matter (TFM) while exhibiting the advantages of a transparent soap. In the process of preparing the transparent bar of the invention, minimal amount of volatile alcohols are used and the maturation time is greatly reduced as compared to conventional transparent soaps. While the soap bar exhibits the desired transparency as well as good lather, feel, hardness it provides for enhanced germ reduction as compared to a conventional high TFM bar (usually prepared using the milled and plodded soap bar making process).

The present invention has certain other additional advantages heretofore not known with such type of soap bars which exhibit germ reduction. One advantage is that by way of delivering the antimicrobial actives in the soap bar format of the present invention, it has been found that the strong odour of thymol and terpineol (which are not like by some people) is perceived at a lower level, as compared to a composition where thymol and terpineol are delivered through a conventional milled and plodded bar (which comprises much lesser amount of polyhydric alcohols).

Another advantage of the present invention is that it is seen to have enhanced mildness as compared to similar composition comprising other antimicrobial agents. It has been observed that when soap bars include conventional germ reducing agents like TCN (Trichlocarban) the bar exhibits high zein number. Zein number is a measure of mildness of the composition on skin, with lower zein numbers indicating more mildness. By way of the present invention it is now possible to get very good germ reduction benefits by including the germ reducing agents of the present invention while ensuring superior mildness when used on skin.

Yet another advantage of the present invention is that with the composition of the invention (especially the ones with high free alkaline content) it is possible to reduce the maturation time of the cast bar compostion, which is highly advantageous in increasing the productivity of the process on the commercial scale. It is well known that soaps prepared by the melt cast route need to be matured i.e. kept in air for a period of time from a few hours to a few days before it achieves a stable composition and reaches the final transparent condition. By way of the present invention it is possible to reduce the maturation time from about 24 - 48 hours required in conventional cast bar soaps to less than 24 hours required in the soap bar of the present invention, especially when free alkalinity is included. A further advantage of inclusion of free alkalinity is that the antimicrobial efficacy of thymol and terpineol is enhanced.

Yet another advantage of the soap bar of the present invention is that the rate of wear of the soap bar when tested by the 'Mush by immersion' test is found to be much lower for the present invention when free alkalinity is included as compared to a soap bar where no free alkalinity is included.

The present invention relates to a transparent soap bar comprising total fatty matter of 30 to 60% by weight of the composition. The term soap refers to the salts of these fatty acids. Suitable cations include sodium, potassium, zinc, magnesium, alkyl ammonium and aluminium. Sodium is an especially preferred cation. The transparent soap of the present invention is obtained by saponifying fatty acids or the oil or their blends. Suitable fatty acids are the C8-C22 fatty acids. Fatty acids particularly suitable for the invention include stearic acid, lauric acid, palmitic acid or mixtures thereof. These can also be obtained from plant and/or animal sources, for example tallow fatty acids, or palm fatty acids.

For a soap having 18 carbon atoms, an accompanying sodium cation will generally amount to about 8% by weight.

It is also possible to saponify oils or their mixtures with fatty acids. Suitable oils for the invention include tallow, tallow stearines, palm oil, palm stearines, soya bean oil, fish oil, rice bran oil, sunflower oil, coconut oil, babassu oil and palm kernel oil. Especially preferred is hardened palm kernel oil.

The total fatty matter of the transparent soap is from 30 to 60%, more preferably from 30 to 50 % and most preferably from 35 to 45%.

A preferred fatty acid for inclusion in the fatty acid charge for preparing the soap is 12-hydroxystearic acid. When present, it is included at 1 to 15% by weight of the total fatty matter in the soap composition. Hardened castor oil, which contains about 85% 12-hydroxystearic acid esters is suitable for use in the composition of the invention.

It is preferred that the composition comprises free alkali. The free alkali content (in terms of percentage free sodium hydroxide) is preferably in the range of 0.01 to 0.1%, more preferably in the range of 0.02 to 0.05%. In contrast conventional cast bar soaps have a residual free fatty acid content (measured by wt% of oleic acid) in the range of 0 to 1 %.

Preferably, the fat charge used to make the transparent soap of the invention has an iodine value of from 0 to 20 and more preferably from 2 to 15.

The soap bar composition of the invention includes 20 to 50% polyhydric alcohol. Suitable polyhydric alcohols for the invention include glycerol, poly ethylene glycol, propylene glycol, sorbitol or mixtures thereof. The polyhydric alcohol is present in an amount of from 20 to 50%, more preferably from 20 to 45% and most preferably from -20 to 40% by weight of the total soap bar. When included, polyethylene glycol used in the invention preferably has a molecular weight of from 200 to 1500.

When sorbitol is included, it is preferably present in 5 to 20%, more preferably 8 to 18% by weight of the composition. When glycerol is included, it is preferably present in 0.5 to 20%, more preferably 0.5 to 15% by weight of the composition. When polyethylene glycol is included, it is preferably present in 1 to 15% more preferably 2 to 10% by weight of the composition. When propylene glycol is included, it is preferably present in 1 to 15%, more preferably 2 to 10% by weight of the composition. It is preferred that the composition includes a mixture of sorbitol, polyethylene glycol and propylene glycol. It is most preferred to further include glycerol in addition to the above listed three polyhydric alcohols.

### Thymol

The soap bar composition of the invention comprises 0.01 to 5% of thymol. The structure of thymol is given below:

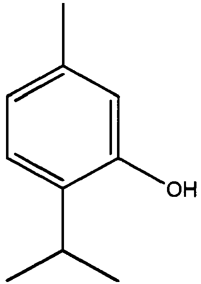

The composition of the invention comprises preferably 0.01 to 1%, further more preferably 0.01 to 0.4%, by weight thymol. Thymol may be added to the composition in purified form. Alternatively, thyme oil or thyme extract comprising thymol may be added to the composition, while ensuring that thymol is present in the desired concentration in the composition of the present invention. Thyme oil or thyme extract is obtained from the thyme plant. Thyme plant refers to a plant belonging to genus *Thymus* and includes but is not limited to the following species: *Thymus vulgaris, Thymus zygis, Thymus satureoides, Thymus mastichina, Thymus broussonetti, Thymus maroccanus, Thymus pallidus, Thymus algeriensis, Thymus serpyllum, Thymus pulegoide,* and *Thymus citriodorus.*

### Terpineol

The soap bar composition of the invention comprises 0.01 to 5% of terpineol.

The structure of a terpineol compound is given below:

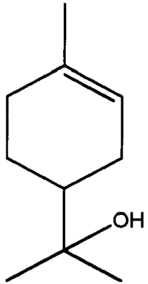

The terpineol is preferably selected from alpha-terpineol, beta-terpineol, gamma-terpineol or mixtures thereof. It is particularly preferred that the terpineol is alpha-terpineol. Terpineol may be added to the antimicrobial composition in purified form. Alternatively pine oil comprising terpineol may be added to the antimicrobial composition while ensuring that terpineol is present in the desired concentration in the composition of the present invention. The composition preferably comprises 0.02 to 5%, further more preferably 0.03 to 1%, and even more preferably 0.04 to 0.6% by weight terpineol.

Other essential oil active e.g. eugenol, geraniol or a mixture thereof may be included in the composition for additional germ reduction benefits. More preferably, the composition comprises a mixture of thymol, terpineol and eugenol. Non-soap detergent actives are preferably included in the soap bar composition of the invention. Non-soap detergent actives may be chosen from anionic, cationic, zwitterionic, amphoteric surfactants or their mixtures thereof.

The non-soap detergent active is preferably an anionic surfactant. Preferably the amount of the non-soap detergent active is included at 1 to 20% by weight of the composition.

Salts may be included in the composition. Suitable salts include sodium and potassium salts. Sodium chloride is an especially preferred salt and is preferably used in an amount of from 0.1 to 2%.

Other optional ingredients like anti-oxidants, perfumes, polymers, chelating agents, colourants, deodorants, dyes, emollients, moisturisers, enzymes, foam boosters, germicides, anti-microbials, lathering agents, pearlescers, skin conditioners, solvents, stabilisers, superfatting agents, sunscreens etc. may be added in suitable amounts in the process of the invention, provided the transparency of the soap is retained.

The composition of the invention is preferably prepared using the following process steps:
(i) preparing a melt of the composition at a temperature in the range of 40 to 90°C;
(ii) pouring the melt into a suitable mould,
(iii) cooling the composition to a temperature in the range of 20 to 30°C; and
(iv) demoulding the composition.

The process to make the soap bar composition of the invention thus utilises minimal amount of volatile alcohol in the process. A preferred process comprises the steps of admixing at least one fatty acid and/or oil, at least one polyhydric alcohol, water and neutralising the mixture by using a suitable alkali, optionally adding a suitable non-soap detergent active preferably filtering the mass, pouring into a suitable mould, and cooling. The cooled moulded soap usually in the form of long logs may be then be cut into bars of desired size. This may be followed by maturation over a period of 0-4 weeks.

A more detailed description of the preferred process is given below:
One or more fatty acids and/or oils, and optionally 12-hyroxystearic acid, at least one polyhydric alcohol, water and optionally a volatile alcohol are mixed. The mass is then neutralised by using an alkali, preferably caustic soda. The neutralisation is preferably carried out at or around 80°C. The completion of neutralisation is monitored by the consumption of alkali. Once the neutralisation is completed, other ingredients may be added to the mass. The mixture is then preferably filtered by suitable means, for example through a filter press. The mixture is then cooled in chilled moulds.
Preferably the cooling is carried out by using a Schicht cooler. The bars are typically formed as long cylinders at the end of cooling. The bars are then matured for a period of 0-4 weeks either as such or after cutting into smaller billets or sequentially as bars followed by cut billets. When volatile alcohol is not used in the process, maturation is not required.

In a preferred aspect, the bars obtained from the Schicht cooler are matured for a period of 0 to 2 weeks. The bars are then cut to the requisite shape and size and stamped if required and further matured for a period of 0 to 2 weeks.

The invention also provides for a method of providing germ reduction to a surface comprising the steps of
(i) applying a composition of the invention and
(ii) rinsing the surface with a suitable solvent or wiping the surface with a suitable wipe.

In a preferred aspect the step of rinsing or wiping the surface is carried out within 5 minutes, more preferably within 1 minute, further more preferably within 30 seconds and most preferably within 15 seconds after the step of applying the composition on the surface.

The invention will be further described by the following illustrative non-limiting examples.

### EXAMPLES:

### Examples 1-3: Germ reduction afforded by various soap compositions.

Different soap bars having composition as shown in Table - 1 were prepared.

These soap bars were tested in in-vitro assays as per the following procedure. About 10⁷ bacterial cells (*E*. *coli* ATCC 10536) were taken in a test tube and contacted with various compositions for a period of 15 seconds. Bacteria were taken out after 15 seconds of contact and presence of viable cells was determined by serial dilution and plating on agar plates. The data is presented in log (Viable *E*. co/*i*) which is the log₁₀ of the number of viable *E.coli* remaining after 15 seconds of contact. Thus if 10⁴ remained, log (Viable *E*. *coli*) is 4.

The sample used in the assays was an 8% aqueous solution of the soap bars. The amount of E-Coli added initially was about 10⁷. The results of the germs remaining after contact with the actives for 15 seconds is summarized in Table 1.

**Table 1**

| Ingredient | Example - 1. Wt% | Example - 2, Wt% | Example - 3, Wt% |
|---|---|---|---|
| Anhydrous Soap | 80.50 | 80.50 | 40.30 |
| Sodium Lauryl sulphate | 1.00 | 1.00 | 1.00 |
| Glycerol | 1.00 | 1.00 | 1.00 |
| Sorbitol | - | - | 12.90 |
| Polyethylene glycol 200 | - | - | 4.00 |
| Propylene glycol | - | - | 6.00 |
| Thymol | - | 0.25 | 0.10 |
| Terpineol | - | 0.50 | 0.25 |
| Water | To 100 | To 100 | To 100 |
| Log (CFU/ml) | 6.35 | 5.21 | 3.70 |

The data in Table-1 indicates that a conventional soap comprising terpineol and thymol (Example -2) is able to provide germ reduction as compared to the soap without these actives (Example -1) in a 15 second test. Compared to that, inclusion of terpineol and thymol in a soap composition of the invention (Example - 3) at even lower concentration is significantly better.

### Example 4-7: Improved odour impact of the composition of the invention as compared to a conventional soap bar.

Compositions as shown below in Table 2 were prepared

**Table -2**

| Ingredient | Example - 4, Wt% | Example - 5, Wt% | Example - 6, Wt% | Example - 7, Wt% |
|---|---|---|---|---|
| Anhydrous Soap | 80.50 | 80.50 | 40.30 | 40.30 |
| Sodium Lauryl sulphate | 1.00 | 1.00 | 1.00 | 1.00 |
| Glycerol | 1.00 | 1.00 | 1.00 | 1.00 |
| Sorbitol | - | - | 12.90 | 12.90 |
| Polyethylene glycol 200 | - | - | 4.00 | 4.00 |
| Propylene glycol | - | - | 6.00 | 6.00 |
| Thymol | 0.05 | 0.20 | 0.05 | 0.20 |
| Terpineol | 0.25 | 0.50 | 0.25 | 0.50 |
| Water | To 100 | To 100 | To 100 | To 100 |

The compositions were tested by a trainer perfumer for the odour impact of thymol. It is preferred that the composition has a low odour impact of thymol since many consumer do not prefer this odour. The following scale below was used:
+++ : strong smell of thymol
++ : slight smell of thymol
+: Perceptible smell of thymol
o: No smell of thymol

The odour impact scores are compiled below in Table - 3 for two conditions: (a) dry sniff of the soap bar and (ii) In use odour

**Table - 3**

| Example | Dry sniff | In use |
|---|---|---|
| 4 | + | ++ |
| 5 | +++ | + |
| 6 | O | + |
| 7 | ++ | + |

The data in Table 3 above indicates that the odour impact of thymol is reduced in the compositions of the invention (Examples 6 and 7) as compared to examples outside the invention (Examples 4 and 5).

Examples 8 and 9: Mildness and germ reduction benefits of the invention as compared to a market sample of antibacterial soap.

### Example 8: A soap bar composition as per Table 4 was prepared

**Table - 4**

| Ingredient | Example - 8, Wt% |
|---|---|
| Anhydrous Soap | 40.60 |
| Sodium Lauryl sulphate | 4.00 |
| Glycerol | 10.20 |
| Sorbitol | 12.80 |
| Polyethylene glycol -4 | 4.00 |
| Propylene glycol | 6.00 |
| Thymol | 0.10 |
| Terpineol | 0.30 |
| Triclosan | 0.30 |
| Free Alkalinity (as %NaoH) | 0.035 |
| Water | To 100 |

Example -9: A market sample of a soap bar sold under the brand name of Dettol was used with the ingredient listed on the pack as follows: Sodium palmitate, Aqua, Sodium Palm Kernelate, Talc, Parfum, Sodium Chloride, Triclocarban, Sodium C14-16 Olefin Sulfonate, Etidronic Acid, Cl 11680, PEG-7, Amodimeticon, cyclodextrin, Trideceth-10, Acetic Acid, Tetrabutyl Ammonium Bromide, Disoidum EDTA, Cl 12150.

The Zein number of the two compositions were measured using the following procedure along with the log reduction in bacteria as measured using a procedure used in Examples 1 to 3.

Zein testing:
1.5% zein was stirred in 30 ml of 1 % soap solution at 25 °C for one hour. The mixture was centrifuged at 2000 rpm for 30 minutes. The zein pellet was soaked in 10 ml water for 30 minutes, and dried under vacuum in 45 °C oven for 48-72 hours until all of the water had evaporated. The % difference in the weight of zein was taken as the zein solubility of the surfactant.

The higher the zein number, the less is the mildness of the surfactant on skin.

The data for samples of Example 8 and 9 are summarized in Table 5 below:

**Table -5**

| Example | Zein number | Log reduction of bacteria in 30 seconds |
|---|---|---|
| 8 | 215 | 5.2 |
| 9 | 405 | 3.8 |

The data in table 3 above indicates that the composition as per the invention is milder as evidenced by the low zein number and is more efficacious in reducing bacteria.

### Example 8, 10: Effect of free alkalinity

Example 10: A soap bar as per Example 8 was prepared except that it did not include the free alkalinity (of 0.035% as free NaoH) in the composition.
The soap bars of Example 8 and 10 were analysed for manufacturing process parameters and various soap bar user attributes. It was noted that soap bar as per the invention Example 10 (without additional free alkalinity) required a maturation time of about 24 to 48 hours while the preferred aspect of the invention (Example 8) with free alkalinity requires a maturation time of only about 24 hours, thus providing enhanced manufacturing productivity.

## Claims

1. A substantially transparent soap bar composition comprising
(i) 30 to 60% of total fatty matter;
(ii) 20 to 50% of a polyhydric alcohol;
(iii)0.01 to 5% terpineol;
(iv)0.01 to 5% thymol; and
(v) 5 to 25% water by weight of the composition

2. A composition as claimed in claims 1 wherein said polyhydric alcohol is glycerol, polyethylene glycol, propylene glycol, sorbitol or mixtures thereof.

3. A composition as claimed in claims 1 or 2 comprising 1 to 20% by weight of a non-soap detergent active.

4. A composition as claimed in claim 3 wherein said non-soap detergent active is an anionic surfactant.

5. A composition as claimed in any one of the preceding claims comprising 1 to 15% salt of 12-hydroxystearic acid by weight of the total fatty matter in the composition.

6. A composition as claimed in any one of the preceding claims prepared by a process comprising the steps of:
(i) preparing a melt of the composition at a temperature in the range of 40 to 90°C;
(ii) pouring the melt into a suitable mould,
(iii) cooling the composition to a temperature in the range of 20 to 30°C; and
(iv) demoulding the composition.

7. A method of providing germ reduction to a surface comprising the steps of
(i) applying a composition as claimed in any one of the preceding claims and
(ii) rinsing the surface with a suitable solvent or wiping the surface with a suitable wipe.

8. A method as claimed in claim 7 wherein said step of rinsing or wiping the surface is carried out within 5 minutes of applying the composition.

## Patentansprüche

1. Im Wesentlichen transparente Seifenriegelzusammensetzung, umfassend
(i) 30 bis 60% gesamtes Fettmaterial,
(ii) 20 bis 50% eines mehrwertigen Alkohols,
(iii) 0,01 bis 5% Terpineol,
(iv) 0,01 bis 5% Thymol und
(v) 5 bis 25% Wasser vom Gewicht der Zusammensetzung.

2. Zusammensetzung nach Anspruch 1, wobei der mehrwertige Alkohol Glycerol, Polyethylenglycol, Propylenglycol, Sorbitol oder Mischungen davon ist.

3. Zusammensetzung nach Anspruch 1 oder 2, umfassend 1 bis 20 Gew.-% eines aktiven Nicht-Seifen-Detergents.

4. Zusammensetzung nach Anspruch 3, wobei das aktive Nicht-Seifen-Detergent ein anionisches Tensid ist.

5. Zusammensetzung nach irgendeinem der vorhergehenden Ansprüche, umfassend 1 bis 15% Salz der 12-Hydroxystearinsäure vom Gewicht des gesamten Fettmaterials in der Zusammensetzung.

6. Zusammensetzung nach irgendeinem der vorhergehenden Ansprüche, hergestellt durch ein Verfahren, umfassend die Schritte:
(i) Herstellen einer Schmelze der Zusammensetzung bei einer Temperatur in dem Bereich von 40 bis 90°C,
(ii) Gießen der Schmelze in eine geeignete Form,
(iii) Kühlen der Zusammensetzung auf eine Temperatur in dem Bereich von 20 bis 30°C und
(iv) Entformen der Zusammensetzung.

7. Verfahren zur Schaffung einer Keimreduktion auf einer Oberfläche, umfassend die Schritte
(i) Aufbringen einer Zusammensetzung nach irgendeinem der vorhergehenden Ansprüche und
(ii) Spülen der Oberfläche mit einem geeigneten Lösungsmittel oder Wischen der Oberfläche mit einem geeigneten Wischtuch.

8. Verfahren nach Anspruch 7, wobei der Schritt des Spülens oder Abwischens der Oberfläche innerhalb von 5 Minuten vom Aufbringen der Zusammensetzung durchgeführt wird.

## Revendications

1. Composition de barre de savon pratiquement transparente comprenant
(i) de 30 à 60 % de matière grasse totale ;
(ii) de 20 à 50 % d'un alcool polyvalent ;
(iii) de 0,01 à 5 % de terpinéol ;
(iv) de 0,01 à 5 % de thymol ; et
(v) de 5 à 25 % d'eau en masse de la composition.

2. Composition selon la revendication 1, dans laquelle ledit alcool polyvalent est le glycérol, le polyéthylène glycol, le propylène glycol, le sorbitol ou les mélanges de ceux-ci.

3. Composition selon la revendication 1 ou 2 comprenant de 1 à 20 % en masse d'un actif de détergent de non-savon.

4. Composition selon la revendication 3, dans laquelle ledit actif de détergent de non-savon est un tensioactif anionique.

5. Composition selon l'une quelconque des revendications précédentes comprenant de 1 à 15 % de sel d'acide 12-hydroxystéarique en masse de la matière graisseuse totale dans la composition.

6. Composition selon l'une quelconque des revendications précédentes préparée par un procédé comprenant les étapes consistant :
(i) à préparer une masse en fusion de la composition à une température dans l'intervalle de 40 à 90 °C ;
(ii) à verser la masse en fusion dans un moule approprié,
(iii) à refroidir la composition à une température dans l'intervalle de 20 à 30 °C ; et
(iv) à démouler la composition.

7. Procédé de fourniture de réduction de germes sur une surface comprenant les étapes consistant
(i) à appliquer une composition selon l'une quelconque des revendications précédentes et
(ii) à rincer la surface avec un solvant approprié ou à essuyer la surface avec un torchon approprié.

8. Procédé selon la revendication 7, dans lequel ladite étape de rinçage ou d'essuyage de la surface est réalisée dans les 5 minutes suivant l'application de la composition.
